# EUROPEAN PATENT APPLICATION

(11) **EP 3 000 678 A2**
(43) Date of publication of application: **30.03.2016**
(21) Application number: 15178710.8
(22) Date of filing: 28.07.2015
(51) Int. Cl.: B60W 10/02, B60W 10/06, B60W 10/08, B60W 30/18

(54) **VEHICLE CONTROL APPARATUS**

(30) Priority: 19.09.2014 JP 2014191911
(71) Applicant: AISIN SEIKI KABUSHIKI KAISHA, Kariya-shi, Aichi 448-8650 (JP)
(72) Inventor: HARADA, Shinya, Kariya-shi, Aichi 448-8650 (JP); HIROSE, Shota, Kariya-shi, Aichi 448-8650 (JP); TOJO, Takeshi, Kariya-shi, Aichi 448-8650 (JP)
(74) Representative: Kramer Barske Schmidtchen Patentanwälte PartG mbB

(57) **Abstract**

A vehicle control apparatus (1) for performing a creep control of a vehicle including an internal combustion engine (2) and an electric motor (5), the vehicle control apparatus includes a control portion (1) controlling a first torque obtained by the internal combustion engine (2) and a second torque obtained by the electric motor (5) to share and cover a request creep torque for a vehicle creep.

## Description

### TECHNICAL FIELD

This disclosure generally relates to a vehicle control apparatus performing a creep control of a vehicle.

### BACKGROUND DISCUSSION

According to a known vehicle where an automated manual transmission (AMT) or a dual clutch transmission is employed, for example, a wet type clutch or a dry type clutch disposed between an engine and the transmission is brought to a partially engaged state (i.e., a state where a power transmission is obtained in a clutch slipping state) during an idling. Accordingly, a creep phenomenon by which a rotational torque from the engine is transmitted to an output shaft of the transmission is artificially or simulatively obtained in a state where an accelerator pedal is not depressed.

JP61-278650A discloses a technique for maintaining a clutch in the partially engaged state where a vehicle is inhibited from being driven forward so that inhibition of creep and inhibition of low responsiveness at a vehicle start are both achieved. JP62-76026U discloses a technique for stopping a creep control when a duration time of the creep control reaches or exceeds a predetermined time in a state where an occurrence of creep is inhibited by bringing a clutch in the partially engaged state because durability of the clutch is influenced by a long time continuation of the partially engaged state of the clutch.

Recently, a hybrid vehicle including an engine, i.e., an internal combustion engine, serving as a power source and a motor, i.e., an electric motor, is widely spread so that a driving mode is selectively switchable among an engine driving mode where the vehicle is driven only by the engine, a motor driving mode where the vehicle is driven only by the motor, and a hybrid driving mode where the vehicle is driven by both the engine and the motor. A vehicle control apparatus that effectively performs a creep control at a time of idling in a hybrid vehicle including an internal combustion engine and an electric motor as power sources may be desired.

A need thus exists for a vehicle control apparatus which may reduce torque obtained by an internal combustion engine and torque obtained by an electric motor for covering a request creep torque in a hybrid vehicle including the internal combustion engine and the electric motor as power sources.

### SUMMARY

According to an aspect of this disclosure, a vehicle control apparatus for performing a creep control of a vehicle including an internal combustion engine and an electric motor, the vehicle control apparatus includes a control portion controlling a first torque obtained by the internal combustion engine and a second torque obtained by the electric motor to share and cover a request creep torque for a vehicle creep.

Accordingly, the request creep torque is covered and shared by the first torque obtained by the internal combustion engine and the second torque obtained by the electric motor. Thus, each of the first torque and the second torque obtained by each of the internal combustion engine and the electric motor covering the request creep torque may be reduced.

The control portion controls the first torque to be output by controlling an engagement and disengagement state of a clutch which is provided at the vehicle for selectively engaging and disengaging between the internal combustion engine and the driving wheel.

Accordingly, the first torque by the internal combustion engine may be output via the clutch.

The control portion controls the second torque to be output to an input shaft or an output shaft of a transmission provided between the internal combustion engine and the driving wheel of the vehicle.

Accordingly, the second torque may be added to the first torque at an upstream or a downstream of the transmission.

The control portion variably specifies the request creep torque.

Accordingly, each of the first torque and the second torque obtained by each of the internal combustion engine and the electric motor covering the request creep torque may be reduced as necessary.

The control portion decreases the request creep torque in a case where a predetermined time elapses from a predetermined reference timing.

Accordingly, in a case where a continuous output of the creep torque causes an accumulation of load of each of the internal combustion engine and the electric motor, each of the first torque and the second torque obtained by each of the internal combustion engine and the electric motor covering the request creep torque may be reduced.

The control portion variably specifies a sharing rate of each of the first torque and the second torque.

Accordingly, in a case where a continuous output of the creep torque causes an accumulation of load of one of the internal combustion engine and the electric motor, the sharing rate of the torque from the other of the internal combustion engine and the electric motor increases to thereby recover one of the internal combustion engine and the electric motor.

The control portion changes the sharing rate of the first torque by controlling an engagement and disengagement state of a clutch which is provided at the vehicle for selectively engaging and disengaging between the internal combustion engine and the driving wheel.

Accordingly, the engagement and disengagement state of the clutch is controlled so as to adjust the sharing rate of the first torque.

The clutch includes a friction material configured to adjust the first torque, and the control portion changes the sharing rate of the first torque depending on a temperature of the friction material.

Accordingly, in a case where the clutch is brought to a partially engaged state so as to cover at least a portion of the request creep torque, the temperature of the friction member is controllable.

The electric motor includes a coil, and the control portion changes the sharing rate of the second torque depending on a temperature of the coil.

Accordingly, in a case where the electric motor is operated so as to cover at least a portion of the request creep torque, the temperature of the coil is controllable.

The control portion changes the sharing rate of the second torque depending on a state of charge of a battery which is provided at the vehicle for supplying an electric power to the electric motor.

Accordingly, in a case where the electric motor is operated so as to cover at least a portion of the request creep torque, a remaining level of the state of charge of the battery is controllable.

The electric motor includes a coil, and the control portion changes the sharing rate of the second torque depending on a temperature of the coil and a state of charge of a battery which is provided at the vehicle for supplying an electric power to the electric motor.

Accordingly, in a case where the electric motor is operated so as to cover at least a portion of the request creep torque, the temperature of the coil and the remaining level of the state of charge of the battery are controllable.

The control portion specifies the sharing rate of the first torque to a first predetermined sharing rate in a case where a maximum value of the sharing rate of the first torque output from the internal combustion engine is equal to or greater than the first predetermined sharing rate of the first torque and specifies the sharing rate of the second torque to a second predetermined sharing rate in a case where a maximum value of the sharing rate of the second torque output from the motor generator is equal to or greater than the second predetermined sharing rate of the second torque, and a total of the first predetermined sharing rate and the second predetermined sharing rate is equal to 100%.

Accordingly, in a case where each of the internal combustion engine and the electric motor outputs the torque (the first torque and the second torque) to cover the request creep torque at the predetermined sharing rate, the request creep torque may be covered and shared by the first torque at the first predetermined sharing rate and the second torque at the second predetermined sharing rate.

The control portion specifies the sharing rate of the second torque to be equal to or greater than a second predetermined sharing rate in a case where a maximum value of the sharing rate of the first torque output from the internal combustion engine is smaller than a first predetermined sharing rate of the first torque and specifies the sharing rate of the first torque to be equal to or greater than the first predetermined sharing rate in a case where a maximum value of the sharing rate of the second torque output from the electric motor is smaller than the second predetermined sharing rate of the second torque.

Accordingly, in a case where one of the first torque and the second torque obtained by the internal combustion engine and the electric motor is not able to cover the request creep torque at the predetermined sharing rate, the sharing rate of the other of the first torque and the second torque increases to thereby cover a shortage of the request creep torque not covered by one of the first torque and the second torque.

The control portion specifies the sharing rate of the second torque based on a difference between a request torque requested as the first torque and the first torque actually obtained by the internal combustion engine.

Accordingly, in a case where the first torque obtained by the internal combustion engine does not reach the request torque, the sharing rate of the second torque obtained by the electric motor is adjustable to cover a shortage of the request creep torque not covered by the actually obtained first torque.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a block diagram schematically illustrating a construction of a vehicle according to a first embodiment disclosed here;
Fig. 2 is a time chart illustrating a creep control according to the first embodiment;
Fig. 3 is a flowchart illustrating the creep control according to the first embodiment;
Fig. 4 is a graph illustrating a first torque map according to the first embodiment;
Fig. 5 is a time chart illustrating the creep control according to a second embodiment disclosed here;
Fig. 6 is a flowchart illustrating the creep control according to the second embodiment;
Fig. 7 is a graph illustrating a second torque map according to the second embodiment;
Fig. 8 is a graph illustrating a third torque map according to the second embodiment;
Fig. 9 is a graph illustrating a fourth torque map according to the second embodiment;
Fig. 10A is a flowchart illustrating the creep control according to both the first and second embodiments which are employed together and the creep control where an initial control is performed consistently when necessary.
Fig. 10B is a flowchart illustrating the creep control according to both the first and second embodiments which are employed together and the creep control where the initial control is performed consistently when necessary.
Fig. 10C is a flowchart illustrating the creep control according to both the first and second embodiments which are employed together and the creep control where the initial control is performed consistently when necessary.

### DETAILED DESCRIPTION

A vehicle control apparatus according to embodiments is explained with reference to the attached drawings. The embodiments described below are examples and may be appropriately specified and modified when the vehicle control apparatus is practically utilized.

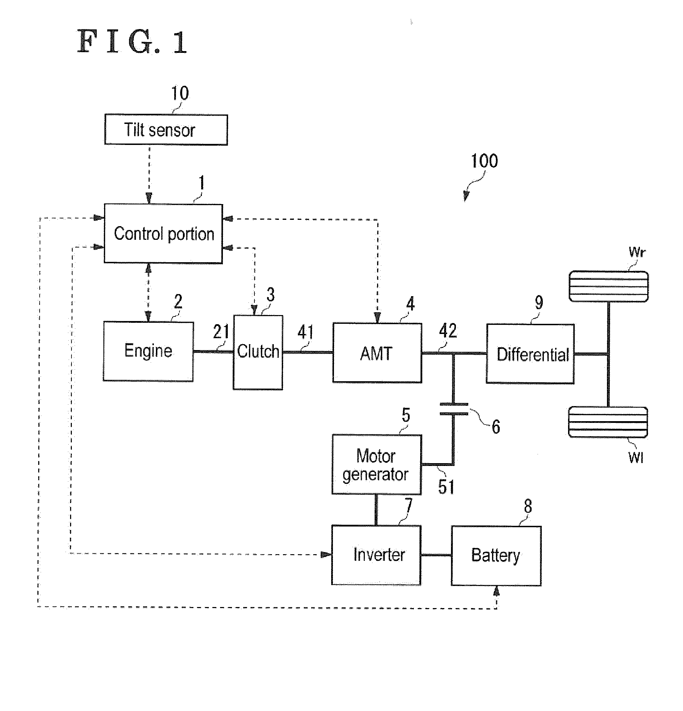

Fig. 1 is a block diagram schematically illustrating a construction of a vehicle according to a first embodiment. In Fig. 1, only a construction necessary for explanation is illustrated and the other construction is omitted. A drive apparatus for a vehicle (which will be hereinafter referred to as a vehicle drive apparatus) 100 includes a control portion 1, an engine 2, a clutch 3, an automated manual transmission (which will be hereinafter referred to as an AMT) 4 serving as a transmission, a motor generator 5, a connection mechanism 6, an inverter 7, a battery 8, a differential 9 and a tilt sensor 10. The control portion 1 serving as the vehicle control apparatus is electrically connected to the engine 2, the clutch 3, the AMT 4, the inverter 7 and the battery 8 to send and receive signals relative thereto for controlling the engine 2, the clutch 3, the AMT 4, the inverter 7 and the battery 8. The control portion 1 is also electrically connected to the tilt sensor 10 to input a detection value from the tilt sensor 10. The control potion 1 may be constituted by an intercommunication portion including an electronic control unit (ECU) for each control target and a controller area network (CAN), for example, or by a single ECU. The control portion 1 includes a timer serving as a time measuring means which is explained later.

The engine 2 is an internal combustion engine serving as a power source employing a hydrocarbon system fuel such as gasoline and kerosene, for example. Specifically, the engine 2 is a gasoline engine or a diesel engine, for example. The engine 2 generates and outputs a rotational torque. The clutch 3 selectively engages and disengages an output shaft 21 of the engine 2 and an input shaft 41 of the AMT 4. The number of rotations of the engine 2 (i.e., speed of the engine 2) is changed so that the changed number of rotations (i.e., changed speed) is output via an output shaft 42 of the AMT 4 to be transmitted to the differential 9.

The battery 8 is a secondary battery connected to the inverter 7 to store a direct current that is converted at the inverter 7 and to supply the direct current to the inverter 7. The inverter 7 is electrically connected to the motor generator 5 and the battery 8 to convert an alternating-current power generated at the motor generator 5 that functions as a power generator into a direct current of which voltage is dropped so that the resulting direct current is output to the battery 8. In addition, the inverter 7 increases pressure of a direct current power supplied from the battery 8 and converts the direct current power into an alternating current power which is then supplied to the motor generator 5 functioning as an electric motor.

The motor generator 5 includes functions as the electric motor generating a rotational torque by the electric power supplied from the inverter 7 and as the power generator converting the rotational torque input from a rotation input-output shaft 51 into the alternating current which is then supplied to the inverter 7. The connection mechanism 6 is brought to a connected state for transmitting the rotational torque generated at the motor generator 5 and output to the rotation input-output shaft 51 to the output shaft 42 of the AMT 4 and is brought to a disconnected state for completely disengaging the rotation input-output shaft 51 of the motor generator 5 from the output shaft 42 of the AMT 4.

The differential 9 receives the rotational torque based on the rotation of which speed is changed at the AMT 4 and the rotational torque output from the motor generator 5, and transmits the rotation based on the aforementioned rotational torque by the AMT 4 and the rotational torque by the motor generator 5 to right and left driving wheels Wr and Wl. The rotational torque from the driving wheels Wr and Wl is transmitted to the output shaft 42 of the AMT 4 via the differential 9 and to the rotation input-output shaft 51 of the motor generator 5 via the differential 9 and the connection mechanism 6.

The tilt sensor 10 detects the inclination or tilt of a vehicle in a front-rear direction and outputs a detection result to the control portion 1. The control portion 1 may detect, specifically in a state where the vehicle is stopped, whether the vehicle is stopped on a downward slope, on a flat road, or on an upward slope by referring to the detected value of the tilt sensor 10. A gravity sensor, for example, may be used as the tilt sensor 10.

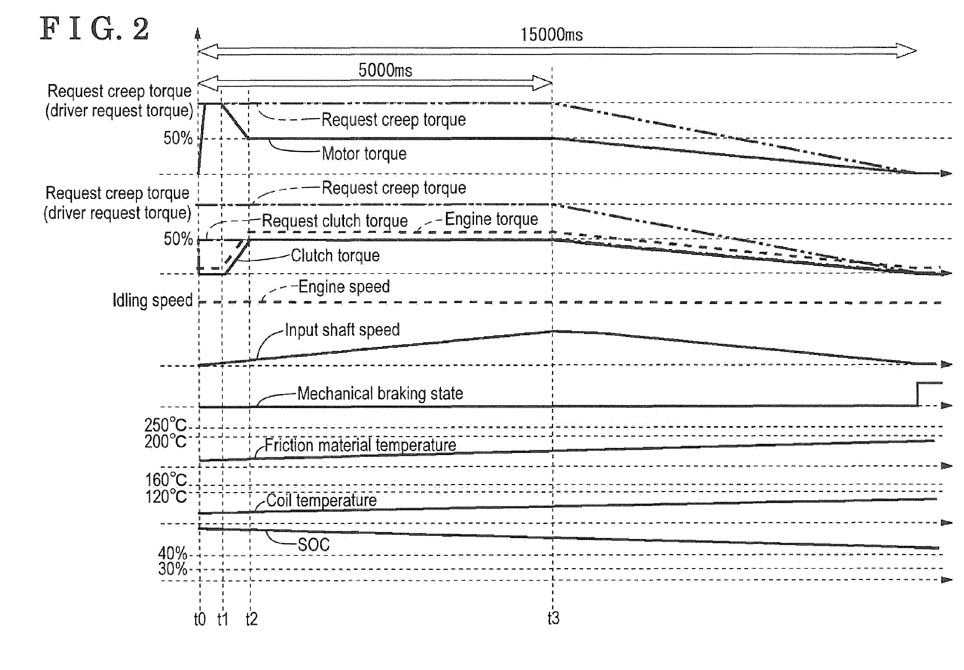

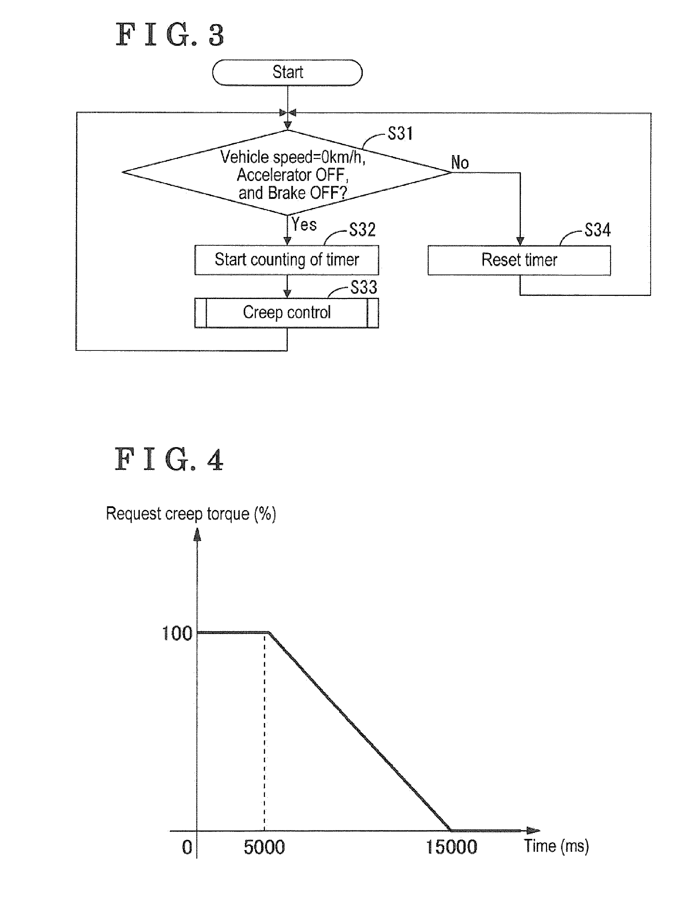

A creep control performed by the control portion 1 is explained with reference to a time chart illustrated in Fig. 2 and a flowchart illustrated in Fig. 3. The control portion 1 performs the following control in a case where it is detected, on the basis of the detection value of the tilt sensor 10, that the vehicle is parked on the upward slope. First, the control portion 1 determines whether or not a condition in which a vehicle speed is 0km/h, an accelerator is released or turned off (i.e., OFF), and a brake is released or turned off (i.e., OFF) is satisfied in step S31 (hereinafter "step" is omitted). In a case where the aforementioned condition in S31 is satisfied, the control portion 1 starts counting of a timer in S32 and starts the creep control based on a first torque map in S33.

In a case where the creep control is started at time t0, as illustrated in Fig. 2, the control portion 1 first increases torque of the motor generator 5 (which will be hereinafter also referred to as a motor torque) including high responsiveness so as to immediately obtain a request creep torque

(driver request creep torque). As a result, the request creep torque is secured. At this time, the connection mechanism 6 is in the connected state so that the motor torque is transmitted to the driving wheels Wr and Wl. The request creep torque may be variable depending on a magnitude of inclination of the vehicle (i.e., magnitude of gradient of the slope). In this case, the first torque map is prepared per request creep torque, i.e., plural first torque maps are prepared, so that one of the first torque maps is selected on a basis of the magnitude of inclination of the vehicle (magnitude of gradient of the slope).

In a case where the creep control is started at time t0, the control portion 1 immediately increases the request creep torque, however, an engine torque is in fact inhibited from immediately increasing. Thus, torque transmitted from the engine 1 via the clutch 3 (which will be hereinafter also referred to as a clutch torque) is also inhibited from immediately increasing. On the other hand, the motor torque relatively immediately increases to the request creep torque. Thereafter, in a case where the engine torque starts increasing at time t1, the control portion 1 increases the clutch torque in association with the increase of the engine torque while decreasing the motor torque. The clutch torque serves as a first torque and the motor torque serves as a second torque.

At this time, the control portion 1 decreases the motor torque so that a sum of the motor torque and the clutch torque that is increasing is equalized with the request creep torque. Then, at time t2, in a case where the clutch torque and the motor torque equally share and cover the request creep torque, i.e., the clutch torque covers and achieves 50% of the request creep torque while the motor torque covers and achieves 50% of the request creep torque, the control portion 1 maintains the state of the clutch 3 at that time so that the state in which the request creep torque is equally shared and covered by the sum of the clutch torque and the motor torque is maintained. At this time, the clutch 3 is in a so-called partially engaged state.

The control portion 1 then maintains the aforementioned state until 5,000 msec (5 seconds) has elapsed from time t0 at which the request creep torque is started to be output. Meanwhile, the number of rotations of the engine (i.e., engine speed) is constant and the number of rotations (i.e., speed) of the input shaft of the engine gradually increases. In addition, the clutch 3 is in the partially engaged state. Thus, a state where friction is generated at a friction member of the clutch 3 is continued, thereby gradually increasing the temperature of the friction member. In addition, because the motor generator 5 rotates while consuming the electric power, a temperature of a coil (coil temperature) of the motor generator 5 increases and a state of charge (SOC) (i.e., charging rate) of the battery 8 decreases.

Fig. 4 is a graph illustrating the first torque map. The first torque map corresponds to the map of the request creep torque. In a state where the request creep torque from time t0 at which the condition for starting the creep control (S31) is satisfied to the elapse of 5,000 msec from time t0 is specified to be 100%, the control portion 1 controls the request creep torque to gradually decrease after the elapse of 5,000 msec (predetermined time) from time t0 (predetermined reference timing) so that the request creep torque turns to zero when 15,000 msec (15 seconds) has elapsed from time t0. The control portion 1 decreases the clutch torque and the motor torque based on the decrease of the request creep torque after the elapse of 5,000 msec. At this time, the control portion 1 gradually decreases the clutch torque and the motor torque so that the sum thereof is equalized with the request creep torque that is decreasing while maintaining the state where the clutch torque and the motor torque equally share (i.e., 50% and 50%) and cover the request creep torque.

Even in a case where the clutch torque and the motor torque decrease by the decrease of the request creep torque, an estimated temperature of the friction material of the clutch 3 and the coil temperature of the motor generator 5 may still continue increasing. In this case, however, the increase rate of each of the temperatures is smaller than before the decrease of the request creep torque. In addition, as for the SOC, the decrease rate of the SOC is also smaller than before the decrease of the request creep torque in a case where the motor torque decreases by the decrease of the request creep torque.

The creep control based on the first torque map is performed in S33 while the counting of the timer is continued in S32 until the negative determination is made in S31, i.e., the vehicle speed fails to achieve 0km/h, the accelerator is operated or turned on (i.e., ON), or the brake is operated or turned on (i.e., ON). In a case where the negative determination is made in S31, i.e., the vehicle speed fails to achieve 0km/h, the accelerator is turned on, or the brake is turned on, the timer is reset in S34 and the creep control is not performed until the vehicle speed turns to 0km/h, the accelerator is turned off, and the brake is turned off again.

According to the vehicle drive apparatus 100 of the present embodiment, the request creep torque is covered and shared by the clutch torque and the motor torque. Thus, each of the clutch torque and the motor torque is not required to independently cover or achieve the request creep torque. The increase of the temperature of the friction material of the clutch 3 is restrained and the increase of the coil temperature of the motor generator 5 is also restrained.

In addition, according to the vehicle drive apparatus 100 of the embodiment, in a case where a duration time of the creep control reaches a predetermined time (i.e., 5, 000 msec, for example), the control unit 1 decreases the request creep torque, thereby restraining or restricting the temperature increase of the friction material of the clutch 3 and the coil of the motor generator 5. Further, when the duration time of the creep control reaches the predetermined time, the creep control is not immediately or suddenly stopped. Specifically, the request creep torque gradually decreases. Thus, the vehicle when climbing a slope is inhibited from drastically moving backwards by the sudden stop of the creep control. A vehicle driver may feel a gradual decrease of the creep torque and may turn on the accelerator or the brake.

Further, according to the vehicle drive apparatus 100 of the embodiment, in a case where the request creep torque is achieved or covered by the clutch torque and the motor torque, the request creep torque is first immediately secured by the motor torque. Then, when the clutch torque is increasing, the motor torque decreases in response to the increase of the clutch torque and thereafter the request creep torque is equally shared and covered by the motor torque and the clutch torque. As a result, the request creep torque may be rapidly secured.

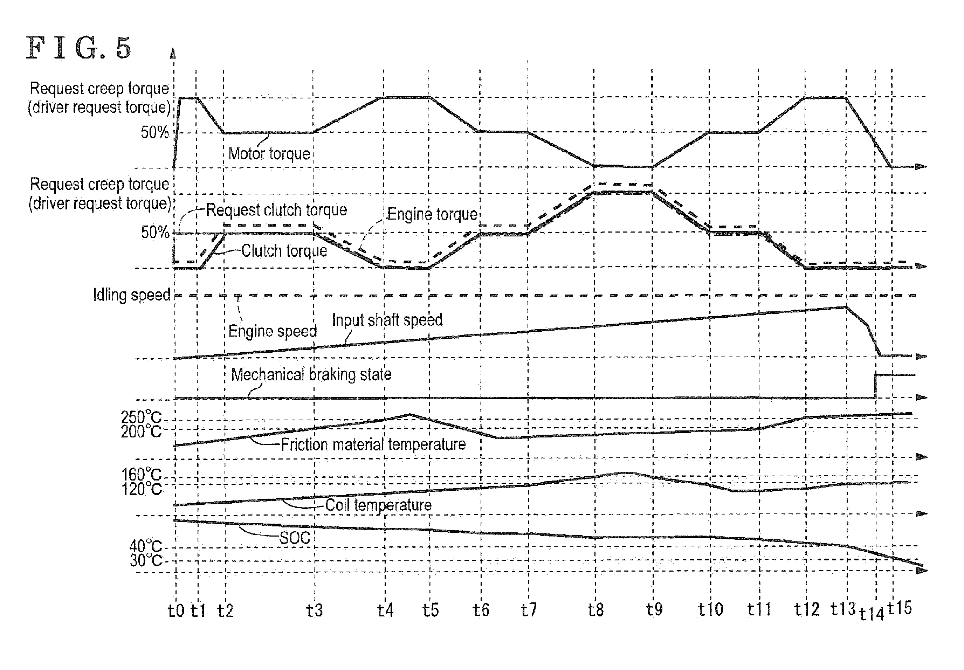

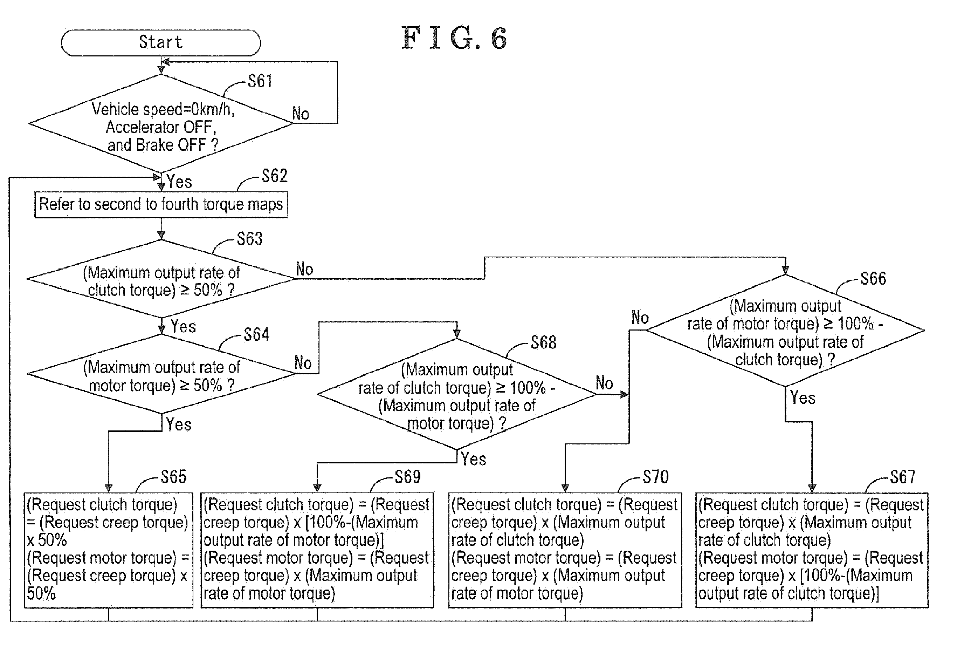

The vehicle drive apparatus according to a second embodiment includes the substantially same construction as the first embodiment illustrated in Fig. 1. Details of the creep control according to the second embodiment are different from the first embodiment. The creep control performed by the control unit 1 in the second embodiment is explained with reference to a time chart illustrated in Fig. 5 and a flowchart illustrated in Fig. 6. The time chart in Fig. 5 is an example of a result obtained by the control unit 1 that performs a control based on the flowchart in Fig. 6

In the second embodiment, in the same way as the first embodiment, the control portion 1 performs the following control in a case where it is detected, on the basis of the detection value of the tilt sensor 10, that the vehicle is parked on the upward slope. First, the control portion 1 determines whether or not the condition in which the vehicle speed is 0km/h, the accelerator is released or turned off (OFF), and the brake is released or turned off (OFF) is satisfied in S61 in the same way as the first embodiment. In a case where the aforementioned condition is satisfied, i.e., the positive determination is made in S61, the control portion 1 increases the motor torque so that the request creep torque is achieved and covered only by the motor torque from time t0 to time t2. Thereafter, until the motor torque and the clutch torque equally share and achieve the request creep torque, i.e., the clutch torque covers 50% of the request creep torque while the motor torque covers 50% of the request creep torque, the control portion 1 performs an initial control for decreasing the motor torque in association with the increase of the clutch torque (which is omitted in the flowchart in Fig. 6).

At time t2, when the clutch torque and the motor torque equally share and cover the request creep torque, i.e., the clutch torque covers 50% of the request creep torque and the motor torque covers 50% of the request creep torque, the control portion 1 starts the creep control in accordance with second to fourth torque maps. In the creep control of the present embodiment, the control portion 1 first refers to the second to fourth torque maps in S62.

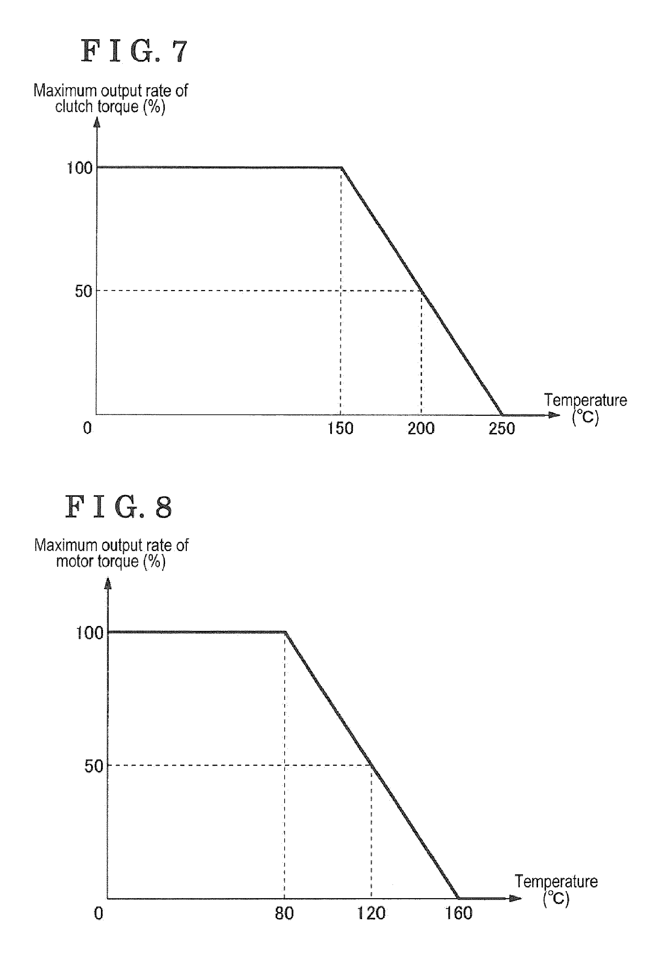

Figs. 7 to 9 are graphs illustrating the second to fourth torque maps. Specifically, the second torque map in Fig. 7 illustrates a relationship between the temperature of the friction material of the clutch 3 and a maximum output rate (available output rate) of the clutch torque. The clutch 3 is able to output the clutch torque at 100% of the output rate in a case where the temperature of the friction material is equal to or smaller than 150 °C. When the temperature of the friction material increases and exceeds 150 °C because of the continuous partially engaged state of the clutch 3, the maximum output rate of the clutch torque covering the request creep torque decreases so as to avoid an excessive temperature increase of the friction material. In a case where the temperature of the friction material reaches or exceeds 250 °C (i.e., first predetermined temperature value), the clutch torque that is able to be output by the clutch 3 becomes zero. At this time, the maximum output rate of the clutch torque corresponds to a rate relative to the request creep torque. Practically, the clutch 3 is capable of outputting the clutch torque at equal to or greater than the aforementioned maximum output rate. As illustrated in Fig. 7, the clutch 3 is able to output the clutch torque corresponding to 50% of the request creep torque in a case where the temperature of the friction material is 200 °C.

The third torque map in Fig. 8 illustrates a relationship between the coil temperature of the motor generator 5 and a maximum output rate (available output rate) of the motor torque. Specifically, the motor generator 5 covers a portion of the request creep torque and thus, when the coil temperature increases and exceeds 80°C, the maximum output rate of the motor torque decreases so as to avoid an excessive temperature increase of the coil. In a case where the coil temperature reaches or exceeds 160 °C (i.e., second predetermined temperature value), the motor torque that is able to be output by the motor generator 5 becomes zero. At this time, the maximum output rate of the motor torque is a rate relative to the request creep torque. Practically, the motor generator 5 is capable of outputting the motor torque equal to or greater than the aforementioned maximum output rate. As illustrated in Fig. 8, the motor generator 5 is able to output the motor torque corresponding to 50% of the request creep torque in a case where the coil temperature is 120 °C.

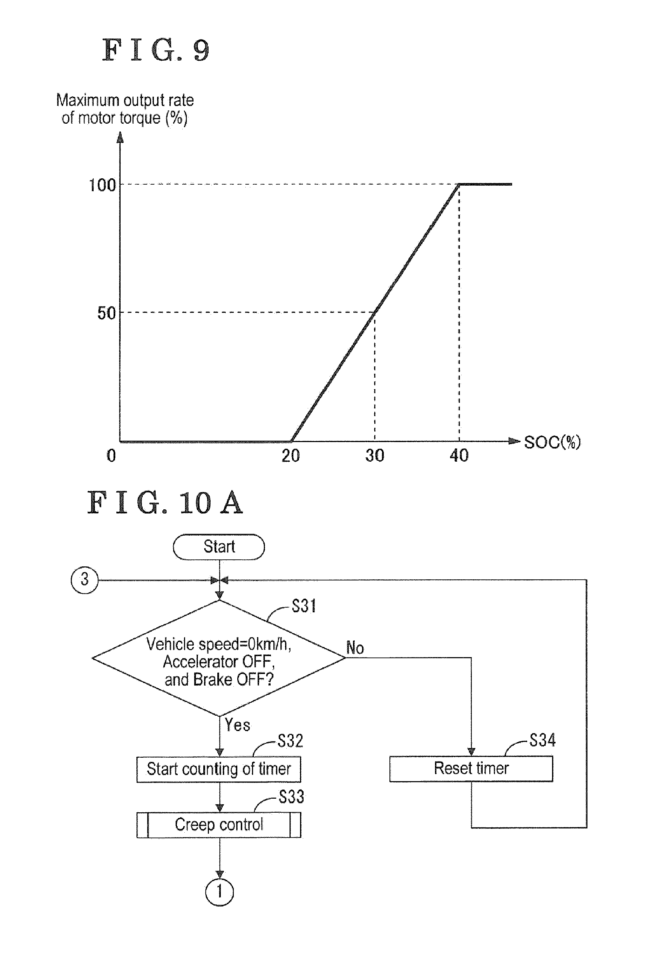

The fourth torque map in Fig. 9 illustrates a relationship between the SOC of the battery 8 and a maximum output rate (available output rate) of the motor torque. Specifically, the motor generator 5 covers a portion of the request creep torque and thus, when the SOC decreases below 40% (i.e., a predetermined value), the maximum output rate of the motor torque covering the request creep torque (i.e., rate relative to the request creep torque) decreases so as to avoid an excessive decrease of the SOC. In a case where the SOC decreases to or below 20%, the motor torque that is able to be output by the motor generator 5 becomes zero. As illustrated in Fig. 9, the motor generator 5 is able to output the motor torque corresponding to 50% of the request creep torque in a case where the SOC of the battery 8 is 30%.

The control portion 1 first refers to the second torque map in Fig. 7 to obtain the maximum output rate of the clutch torque based on the temperature of the friction material of the clutch 3 and determines whether or not the obtained maximum output rate of the clutch torque is equal to or greater than 50% of the request creep torque in S63. At this time, the temperature of the friction material of the clutch 3 is not an actually measured temperature and is an estimated value estimated on a basis of a slippage amount (i.e., an integration value of the clutch torque in a case where a difference exists in the rotation speed between an input side and an output side of the clutch, i.e., in a case where a difference exists in rotation speeds Ne and Ni), for example. Nevertheless, an actual measurement value may be employed in the other cases.

In a case where the maximum output rate of the clutch torque is equal to or greater than 50% of the request creep torque (i.e., the positive determination is made in S63), the control portion 1 further obtains the maximum output rate of the motor torque to determine whether or not the obtained maximum output rate of the motor torque is equal to or greater than 50% of the request creep torque in S64. In S64, specifically, the control portion 1 obtains the maximum output rate of the motor torque based on the coil temperature of the motor generator 5 by referring to the third torque map in Fig. 8 and also obtains the maximum output rate of the motor torque based on the SOC of the battery 8 by referring to the fourth torque map in Fig. 9 so as to determine whether or not the smaller one of the aforementioned maximum output rates of the motor torque is equal to or greater than 50% of the request creep torque. The coil temperature at this time may be an estimation value estimated by an integration value of currents of U, V and W phases or may be an actual measurement value.

In a case where the maximum output rate of the clutch torque and the maximum output rate of the motor torque are both equal to or greater than 50% of the request creep torque, i.e., the positive determination is made in S63 and thereafter the positive determination is made in S64, the control portion 1 controls the clutch 3 and the motor generator 5 so that the clutch torque and the motor torque equally share and cover (i.e., 50% and 50% of) the request creep torque.

A time period from time t2 to time t3 in the time chart in Fig. 5 corresponds to the aforementioned control. Specifically, during the time period from time t2 to time t3, the temperature of the friction material of the clutch 3 tends to increase, however, the temperature is equal to or smaller than 200 °C. In addition, the temperature of the coil of the motor generator 5 tends to increase, however, the temperature is equal to or smaller than 120 °C. In this case, in the flowchart in Fig. 6, the positive determination is made in S63 and the positive determination is made in S64. That is, the clutch torque covers 50% of the request creep torque based on the relationship relative to the temperature of the friction material of the clutch 3 while the motor torque covers 50% of the request creep torque based on the relationship relative to the coil temperature of the motor generator 5 and to the SOC of the battery 8. As a result, the control portion 1 controls the clutch 3 and the motor generator 5 so that the clutch torque covers 50% of the request creep torque (i.e., a request clutch torque is 50% of the request creep torque) while the motor torque covers 50% of the request creep torque (i.e., a request motor torque is 50% of the request creep torque) in S65.

In a case where the temperature of the friction material of the clutch 3 increases and reaches 200 °C, the maximum output rate of the clutch torque obtained in accordance with the second torque map in Fig. 7 falls below 50% of the request creep torque (i.e., the negative determination is made in S63). The control portion 1 then determines whether or not the maximum output rate of the motor torque is sufficient for covering or making up a shortage of the request creep torque not covered by the maximum output rate of the clutch torque in S66. In a case where the maximum output rate of the motor torque is greater than a difference obtained by subtracting the maximum output rate of the clutch torque from 100% (i.e., the positive determination is made in S66), the control portion 1 controls the clutch 3 to output the clutch torque at the maximum output rate and controls the motor generator 5 to output the motor torque covering the remaining of the request creep torque in S67.

A time period from time t3 to time t4 in the time chart in Fig. 5 corresponds to the aforementioned control. Specifically, during the time period from time t3 to time t4, the temperature of the friction material of the clutch 3 exceeds 200 °C (however, not yet reach 250 °C) and the coil temperature of the motor generator 5 is equal to or smaller than 120 °C. In this case, in the flowchart in Fig. 6, the negative determination is made in S63 and the positive determination is made in S66. That is, the clutch torque is not able to cover 50% of the request creep torque in the relationship with the temperature of the friction material of the clutch 3, however, the motor torque is able to cover a shortage of the request creep torque not covered by the clutch torque based on the relationship with the coil temperature of the motor generator 5 and the SOC of the battery 8. Thus, the control portion 1 controls the clutch 3 and the motor generator 5 so that the clutch torque is output as much as possible and the shortage of the request creep torque is fully covered by the motor torque in S67.

In association with the increase of the temperature of the friction material of the clutch 3, the maximum output rate of the clutch torque decreases in accordance with the second torque map after time t3 as illustrated in Fig. 5. The motor torque increases with the decrease of the clutch torque accordingly. In the example illustrated in Fig. 5, the maximum output rate of the clutch 3 is 0% in accordance with the second torque map when the temperature of the friction material of the clutch 3 reaches 250 °C at time t4. Thus, the request creep torque is fully covered by the motor torque in S67.

Because the clutch torque turns to zero, the temperature increase of the friction material of the clutch 3 stops and starts decreasing. When the temperature falls below 250 °C at time t5, the maximum output rate of the clutch torque gradually increases in accordance with the second torque map with the decrease of the temperature of the friction material of the clutch 3. Then, the motor torque gradually decreases from 100% with the increase of the clutch torque.

In a case where the motor torque is able to cover 50% or more of the request creep torque based on the coil temperature of the motor generator 5 and the SOC of the battery 8 in accordance with the third and fourth torque maps at the time the maximum output rate of the clutch torque reaches 50% of the request creep torque at time t6 (i.e., the positive determination is made in S63 and thereafter the positive determination is made in S64), the state where the clutch torque and the motor torque equally share (i.e., 50% and 50%) and achieve the request creep torque is maintained in S65. A time period from time t6 to time t7 corresponds to the aforementioned control. In a case where the output of the clutch torque continues, the temperature of the friction material of the clutch 3 tends to increase again.

In a case where the coil temperature of the motor generator 5 that is increasing exceeds 120 °C before the temperature of the friction material of the clutch 3 reaches 200 °C, the maximum output rate of the motor torque in accordance with the third torque map falls below 50% of the request creep torque. Thus, the negative determination is made in S64. In this case, the control portion 1 determines whether or not the maximum output rate of the clutch torque is sufficient for covering or making up a shortage of the request creep torque not covered by the motor torque by referring to the second torque map based on the temperature of the friction material of the clutch 3 in S68.

In a case where the maximum output rate of the clutch torque is greater than a difference obtained by subtracting the maximum output rate of the motor torque from 100%, i.e., the maximum output rate of the clutch torque is sufficient for covering the shortage of the request creep torque not covered by the maximum output rate of the motor torque (i.e., the positive determination is made in S68), the control portion 1 controls the motor generator 5 to output the motor torque at the maximum output rate and controls the clutch 3 to output the clutch torque covering the remaining of the request creep torque in S69.

A time period from time t7 to time t8 in the time chart illustrated in Fig. 5 corresponds to the aforementioned control. Specifically, during the time period from time t7 to time t8, the coil temperature of the motor generator 5 exceeds 120 °C (however, not yet reach 160 °C) and the temperature of the friction material of the clutch 3 is equal to or smaller than 200 °C. In this case, in the flowchart in Fig. 6, the positive determination is made in S63 and the negative determination is made in S64 followed by the positive determination in S68. That is, the motor torque is not able to cover 50% of the request creep torque based on the relationship with the coil temperature of the motor generator 5, however, the clutch torque is able to cover the shortage of the request creep torque based on the relationship with the temperature of the friction material. Thus, the control portion 1 controls the clutch 3 and the motor generator 5 so that the motor torque is output as much as possible and the shortage of the request creep torque is fully covered by the clutch torque in S69.

In association with the increase of the coil temperature of the motor generator 5, the maximum output rate of the motor torque decreases in accordance with the third torque map after time t7 as illustrated in Fig. 5. The clutch torque therefore increases with the decrease of the motor torque. In the example illustrated in Fig. 5, the maximum output rate of the motor torque by the motor generator 5 is specified to be zero in accordance with the third torque map when the coil temperature of the motor generator 5 reaches 160 °C at time t8. Thus, in S69, the request creep torque is fully covered by the clutch torque.

Accordingly, because the motor torque turns to zero, the increase of the coil temperature of the motor generator 5 stops and starts decreasing. After the coil temperature falls below 160 °C at time t9, the maximum output rate of the motor torque increases in accordance with the third torque map with the decrease of the coil temperature of the motor generator 5. The clutch torque then gradually decreases from 100% with the increase of the motor torque.

In a case where the clutch torque is still able to cover 50% of the request creep torque based on the temperature of the friction material of the clutch 3 in accordance with the second torque map at the time the maximum output rate of the motor torque reaches 50% at time t10 (i.e., the positive determination is made in S63 and thereafter the positive determination is made in S64), the state where the request creep torque is equally shared and covered by the clutch torque and the motor torque is maintained in S65. A time period from time t10 to time t11 in the time chart in Fig. 5 corresponds to the above control. In a case where the output of the clutch torque continues, the temperature of the friction material of the clutch 3 tends to increase again.

An operation from time t11 to time t13 is substantially equal to an operation from time t3 to time t5. In a case where the maximum output rate of the clutch torque falls below 50% of the request creep torque (i.e., the negative determination is made in S63) and the maximum output rate of the motor torque is not sufficient for covering the shortage of the request creep torque (i.e., the negative determination is made in S66), the clutch 3 outputs the maximum clutch torque that is able to be output at this time while the motor generator 5 outputs the maximum motor torque that is able to be output at this time in S70.

A time period from time t13 to time t14 in the time chart in Fig. 5 corresponds to the aforementioned control. At time t13, the SOC of the battery 8 falls below 40% while the temperature of the friction material of the clutch 3 is inhibited from decreasing from 250 °C (i.e., the clutch torque is inhibited from being output). Thus, the motor torque is inhibited from being output at 100% in accordance with the fourth torque map, i.e., the request creep torque is not covered by the sum of the maximum output rate of the clutch torque and the maximum output rate of the motor torque. As a result, the number of rotations of the input shaft (input shaft speed) starts decreasing. In a case where the vehicle driver turns on the brake at time t14, the input shaft speed turns to zero so that the motor torque and the engine torque both turn to zero at time t15.

Even though the maximum output rate of the clutch torque is equal to or greater than 50% (i.e., the positive determination is made in S63), when the maximum output rate of the motor torque is under 50% (i.e., the negative determination is made in S64) and the maximum output rate of the clutch torque is insufficient for covering the shortage of the request creep torque not covered by the motor torque (i.e., the negative determination is made in S68), the clutch 3 outputs the maximum clutch torque that can be output at that time and the motor generator 5 outputs the maximum motor toque that can be output at that time in S70. At that time, because the request creep torque is still not covered by the clutch torque and the motor torque, the input shaft speed decreases accordingly.

The creep control performed by the control portion 1 explained above with the example of the time chart in Fig. 5 is generally explained as below. Firstly, in a case where the sum of the maximum output rate of the clutch torque and the maximum output rate of the motor torque is equal to or greater than the request creep torque, the clutch torque and the motor torque share and achieve the request creep torque so that the sum of the maximum output rate of the clutch torque and the maximum output rate of the motor torque is equalized with the request creep torque (in S65, S67 and S69). At this time, specifically, in a case where the maximum output rate of the clutch torque is equal to or greater than a first predetermined sharing rate while the maximum output rate of the motor torque is equal to or greater than a second predetermined sharing rate (i.e., 50% and 50% in the above example), each of the clutch torque and the motor torque covers the request creep torque at the first or second predetermined sharing rate in S65. Secondly, in a case where the sum of the maximum output rate of the clutch torque and the maximum output rate of the motor torque is insufficient for covering the request creep torque, the maximum clutch torque and the maximum motor torque which can be output at that time are output in S70.

According to the vehicle drive apparatus 100 of the second embodiment, in the same way as the first embodiment, the request creep torque is covered and shared by the clutch torque and the motor torque. Thus, none of the clutch torque and the motor torque need to independently cover the request creep torque. The increase of the temperature of the friction material of the clutch 3 is restrained and the increase of the coil temperature of the motor generator 5 is restrained.

In the second embodiment, the sharing rate of each of the clutch torque and the motor torque relative to the request creep torque changes depending on the temperature of the friction material of the clutch 3, the coil temperature of the motor generator 5, and/or the SOC of the battery 8. Accordingly, the excessive increase of the temperature of the friction material of the clutch 3, the excessive increase of the coil temperature of the motor generator 5, and the excessive decrease of the SOC of the battery 8 is avoidable. In addition, the request creep torque may be output by cooperation of the clutch torque and the motor torque or the torque as close as possible to the request creep torque may be output in a case where the sum of the clutch torque and the motor torque fails to cover or achieve the request creep torque.

The control portion 1 specifies the request clutch torque and the request motor torque to predetermined values respectively as mentioned above and controls (for example, performs a feedback control on) the clutch 3 and the motor generator 5 to thereby achieve the request clutch torque and the request motor torque. At this time, except for a divergence (difference) between the clutch torque that is actually obtained (actual clutch torque) and the request clutch torque in a case where the aforementioned initial control is performed, for example, the actual clutch torque and the request clutch torque are generally substantially the same as each other and also the motor torque that is actually obtained (actual motor torque) and the request motor torque are substantially the same as each other. Thus, in the disclosure, the case where the control portion 1 specifies each of the request clutch torque and the request motor torque to the aforementioned predetermined value and controls (for example, performs the feedback control on) each of the clutch 3 and the motor generator 5 is simply expressed as "output" of each of the clutch torque and the motor torque.

In the vehicle drive apparatus 100, the first embodiment and the second embodiment may be employed together. In addition, in each of the first and second embodiments, in a case where the condition for starting the creep control (i.e., S31 and S61) is satisfied, the control portion 1 performs the initial control where the request creep torque is output only by the motor torque and thereafter the motor torque decreases in association with the increase of the clutch torque until the clutch torque and the motor torque equally share and cover (50% and 50%) the request creep torque. The aforementioned initial control, however, is not limited to be performed at the time the condition for starting the creep control is satisfied and may be performed consistently or any time when necessary.

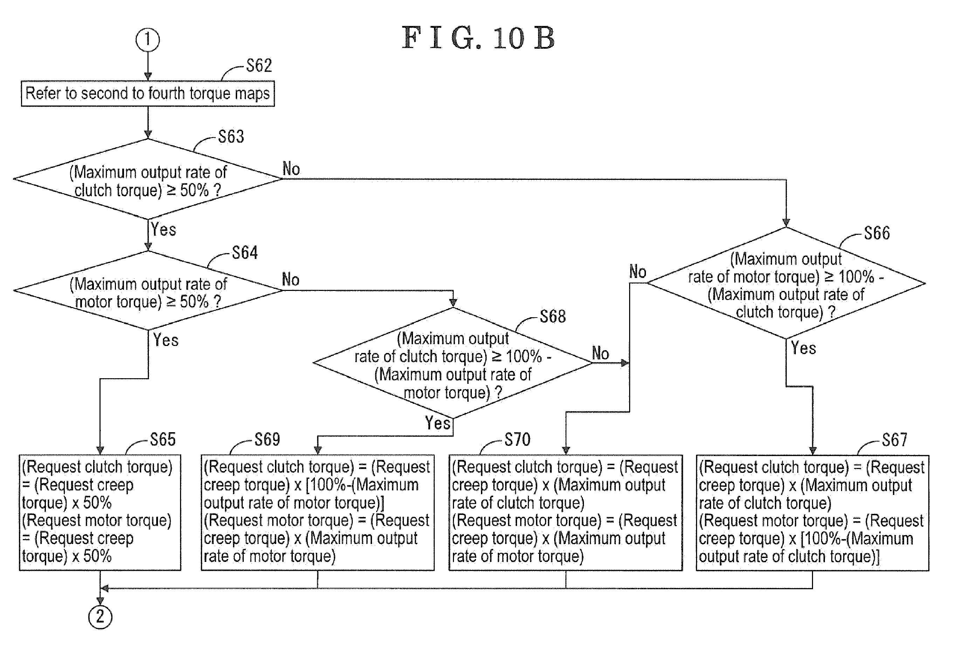

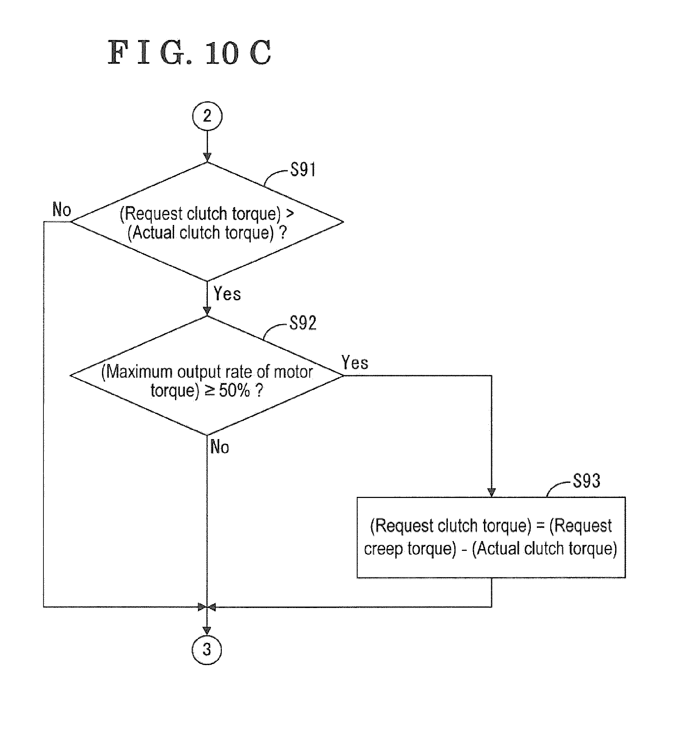

Figs. 10A, 10B and 10C are flowcharts each of which illustrates a case where the first embodiment and the second embodiment are employed together and the initial control as explained above is performed any time as necessary. In Figs. 10A, 10B and 10C, the same processes as the first and second embodiments bear the same reference signs and explanation is appropriately omitted. First, the processes in S31, S32 and S33 are performed and the request creep torque is decided in S33. Thereafter, the process in S62 is performed so that the magnitude of each of the clutch torque (i.e., the request clutch torque) and the motor torque (i.e., the request motor torque) is decided in the processes in S62 to S70.

Afterwards, the control portion 1 compares the clutch torque that is decided (request clutch torque) and the actually obtained clutch torque (actual clutch torque) in S91. In a case where the request clutch torque is greater than the actual clutch torque (i.e., the positive determination is made in S91), the control portion 1 then determines whether or not the maximum output rate of the motor torque is equal to or greater than 50% of the request creep torque in S92. In a case where the maximum output rate of the motor torque is equal to or greater than 50% of the request creep torque (i.e., the positive determination is made in S92), the motor torque is specified to have the magnitude to cover the shortage of the request creep torque not covered by the actual clutch torque (i.e., a value obtained by subtracting the actual clutch torque from the request creep torque) in S93 regardless of the motor torque (request motor torque) that is decided in S62 to S70.

Thereafter, the control portion 1 returns to the process in S31 and continues the aforementioned flow as long as the condition of the creep control is satisfied. In a case where the actual clutch torque is equal to or greater than the request clutch torque (i.e., the negative determination is made in S91) or in a case where the actual clutch torque is below the request clutch torque and the maximum output rate of the motor torque is less than 50% (i.e., the positive determination is made in S91 and then the negative determination is made in S92), the control portion 1 controls so that the clutch torque and the motor torque decided in S62 to S70 are output and returns to the process in S31.

Accordingly, the control for changing the request creep torque in the first embodiment, the control for changing the sharing rate of each of the clutch torque and the motor torque in the second embodiment, and the control performed in a case where the actual clutch torque fails to follow the request clutch torque in the first and second embodiments may be employed independently or in an appropriately combined manner.

In the first and second embodiments, the vehicle drive apparatus 100 includes the tilt sensor 10. Then, the creep control is performed in a case where the tilt sensor 10 detects that the vehicle is on the upward slope. Alternatively, the vehicle drive apparatus 100 may not be provided with the tilt sensor 10. In this case, the creep control may be performed regardless of whether or not the vehicle is on the upward slope.

In addition, in the vehicle drive apparatus 100 of the first and second embodiments, the connection mechanism 6 connects between the rotation input-output shaft 51 from the motor generator 5 and the output shaft 42 of the AMT 4 so as to transmit the rotation of the rotation input-output shaft 51 to the output shaft 42 and transmits the rotation of the output shaft 42 to the rotation input-output shaft 51. The vehicle drive apparatus 100, however, is not limited to include the aforementioned construction. For example, the vehicle drive apparatus 100 may include a construction where the motor generator 5 includes two rotation input shafts, one of the shafts being connected to the output shaft 42 of the AMT 4 in the same way as the rotation input-output shaft 51 and the other of the shafts being connected to the input shaft 41 of the AMT 4. Further, for example, the vehicle drive apparatus 100 may include two motor generators 5, one of the rotation input shafts of one of the motor generators 5 being connected to the output shaft 42 of the AMT 4 and the other of the rotation input shafts of the other of the motor generators 5 being connected to the input shaft 41 of the AMT 4.

In the aforementioned embodiments, in a case where the maximum output rate of the clutch 3 and the maximum output rate of the motor generator 5 are both sufficient, the clutch torque and the motor torque equally share (i.e. 50% and 50%) and cover the request creep torque. At this time, however, the sharing rate is not necessary 50%. For example, in a case where the maximum output rate of the clutch 3 and the maximum output rate of the motor generator 5 are both sufficient, the clutch torque may cover 40% of the request creep torque as a predetermined sharing rate and the motor torque may cover 60% of the request creep torque as a predetermined sharing rate.

In the aforementioned embodiments, the control portion 1 may output the clutch torque (first torque) in a state where the clutch 3 is partially engaged.

Accordingly, a portion of the request creep torque is covered by the torque from the motor generator 5 (electric motor) so that the torque output via the clutch 3 in the partially engaged state from the engine 2 (internal combustion engine) may be reduced, which may lead to a reduction of heat generation of the clutch 3.

In addition, in the embodiments, the control portion 1 may gradually decrease the request creep torque as time proceeds in a case where the predetermined time (i.e., 5,000 msec) elapses from the predetermined reference timing (i.e., time t0).

Accordingly, inconvenience such as a sudden backward movement of the vehicle on the upward slope, for example, because of a sudden decrease of the request creep torque may be reduced in a state where a continuous output of the creep torque causes an accumulation of load of each of the engine 2 and the motor generator 5.

Further, in the embodiments, the control portion 1 may decrease the sharing rate of the clutch torque (first torque) in a case where the temperature of the friction material increases so as to exceed the first predetermined temperature value.

Accordingly, the excessive heat generation of the friction material is avoidable.

Furthermore, in the embodiments, the control portion 1 may decrease the sharing rate of the motor torque (second torque) in a case where the temperature of the coil increases so as to exceed the second predetermined temperature value.

Accordingly, the excessive heat generation of the motor generator 5 is avoidable.

Furthermore, in the embodiments, the control portion 1 may decrease the sharing rate of the motor torque (second torque) in a case where the SOC of the battery 8 decreases below the predetermined value.

Accordingly, the excessive decrease of the SOC of the battery 8 is avoidable.

Furthermore, in the embodiments, the control portion 1 may cover the request creep torque by the motor torque (second torque) at the start of the creep control.

Accordingly, delay in rising of the clutch torque (first torque) from the engine 1 may be covered by the motor torque (second torque) from the motor generator 5.

In the disclosure, the request creep torque is covered and shared by the first torque obtained by the engine 2 (internal combustion engine) and the second torque obtained by the motor generator 5 (electric motor). Thus, each torque covering the request creep torque by the engine 2 or the motor generator 5 may be restrained. The disclosure is effective for a vehicle control apparatus performing a creep control of a vehicle.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A vehicle control apparatus (1) for performing a creep control of a vehicle including an internal combustion engine (2) and an electric motor (5), the vehicle control apparatus (1) comprising:
a control portion (1) controlling a first torque obtained by the internal combustion engine (2) and a second torque obtained by the electric motor (5) to share and cover a request creep torque for a vehicle creep.

2. The vehicle control apparatus (1) according to claim 1, wherein the control portion (1) controls the first torque to be output by controlling an engagement and disengagement state of a clutch (3) which is provided at the vehicle for selectively engaging and disengaging between the internal combustion engine (2) and the driving wheel (Wr, Wl).

3. The vehicle control apparatus (1) according to claim 1 or 2, wherein the control portion (1) controls the second torque to be output to an input shaft (41) or an output shaft (42) of a transmission (4) provided between the internal combustion engine (2) and the driving wheel (Wr, Wl) of the vehicle.

4. The vehicle control apparatus (1) according to any one of claims 1 through 3, wherein the control portion (1) variably specifies the request creep torque.

5. The vehicle control apparatus (1) according to any one of claims 1 through 4, wherein the control portion (1) decreases the request creep torque in a case where a predetermined time elapses from a predetermined reference timing.

6. The vehicle control apparatus (1) according to any one of claims 1 through 5, wherein the control portion (1) variably specifies a sharing rate of each of the first torque and the second torque.

7. The vehicle control apparatus (1) according to claim 6, wherein the control portion (1) changes the sharing rate of the first torque by controlling an engagement and disengagement state of a clutch (3) which is provided at the vehicle for selectively engaging and disengaging between the internal combustion engine (2) and the driving wheel (Wr, Wl).

8. The vehicle control apparatus (1) according to claim 7, wherein the clutch (3) includes a friction material configured to adjust the first torque, and the control portion (1) changes the sharing rate of the first torque depending on a temperature of the friction material.

9. The vehicle control apparatus (1) according to any one of claims 6 through 8, wherein the electric motor (5) includes a coil, and the control portion (1) changes the sharing rate of the second torque depending on a temperature of the coil.

10. The vehicle control apparatus (1) according to any one of claims 6 through 8, wherein the control portion (1) changes the sharing rate of the second torque depending on a state of charge of a battery (8) which is provided at the vehicle for supplying an electric power to the electric motor (5).

11. The vehicle control apparatus (1) according to any one of claims 6 through 8, wherein the electric motor (5) includes a coil, and the control portion (1) changes the sharing rate of the second torque depending on a temperature of the coil and a state of charge of a battery (8) which is provided at the vehicle for supplying an electric power to the electric motor (5).

12. The vehicle control apparatus (1) according to any one of claims 6 through 11, wherein the control portion (1) specifies the sharing rate of the first torque to a first predetermined sharing rate in a case where a maximum value of the sharing rate of the first torque output from the internal combustion engine (2) is equal to or greater than the first predetermined sharing rate of the first torque and specifies the sharing rate of the second torque to a second predetermined sharing rate in a case where a maximum value of the sharing rate of the second torque output from the motor generator (5) is equal to or greater than the second predetermined sharing rate of the second torque, and a total of the first predetermined sharing rate and the second predetermined sharing rate is equal to 100%."

13. The vehicle control apparatus (1) according to any one of claims 6 through 11, wherein the control portion (1) specifies the sharing rate of the second torque to be equal to or greater than a second predetermined sharing rate in a case where a maximum value of the sharing rate of the first torque output from the internal combustion engine (2) is smaller than a first predetermined sharing rate of the first torque and specifies the sharing rate of the first torque to be equal to or greater than the first predetermined sharing rate in a case where a maximum value of the sharing rate of the second torque output from the electric motor (5) is smaller than the second predetermined sharing rate of the second torque.

14. The vehicle control apparatus (1) according to any one of claims 6 through 13, wherein the control portion (1) specifies the sharing rate of the second torque based on a difference between a request torque requested as the first torque and the first torque actually obtained by the internal combustion engine (2).
